# EUROPEAN PATENT APPLICATION

(11) **EP 1 388 703 A1**
(43) Date of publication of application: **11.02.2004**
(21) Application number: 03077195.0
(22) Date of filing: 10.07.2003
(51) Int. Cl.: F16L 47/02, B29C 65/34, B29C 65/00

(54) **Fitting for composite pipe**

(30) Priority: 05.08.2002 GB 0218108
(71) Applicant: Uponor Innovation AB, 513 81 Fristad (SE)
(72) Inventor: Friend, Sally Jane, Nottingham, NG8 2BB (GB); Scott, Allan, Nr. Tewkesbury, Glos. GL20 8HS (GB); Christodoulou, Mario John, Lincoln LN2 4SA (GB)
(74) Representative: Hall, Robert Leonard

(57) **Abstract**

A fitting (1) for a composite pipe (4,5), the pipe (4,5) comprising two or more plastics layers (6,7) and at least one reinforcing and/or barrier layer (8) interposed therebetween, the fitting (1) comprising a hollow tubular internal supporting insert member (3) and a hollow tubular external coupling member (2), the insert (3) and the coupling (2) member being dimensioned so as to define an annular space adapted to receive one or more pipe ends (4,5), the insert (3) providing a supporting layer for the pipe during installation of the fitting and comprising, in use, a seal (19) and a diffusion barrier material for fluid flowing in the pipe.

## Description

This invention relates to pipe fittings, and more particularly to a fitting for use with composite pipes.

Plastic pipes are used increasingly in the transportation of gases and liquids, including oils and chemicals, which are under a high pressure within the pipe. Whilst techniques, such as orientation and cross-linking exist to improve the pressure resistance of a normal thermoplastic pipe wall, it is technically and economically difficult to raise the pressure resistance of the pipe higher than around 20 to 25 bars.

Accordingly, multi-layer composite pipes comprising, for example, a thermoplastic inner layer and, outside it, a reinforcing layer, or a high axial strength inner layer and an outer protective layer, have been proposed for use as high pressure pipes.

In some commercial composite pipes the reinforcing layer consists of fibres wound helically around the thermoplastic inner layer. The fibres may be bundled in tape form and the tape matrix fused to the thermoplastic inner layer by the use of heat, for example, as described in EP 0 593 449. The reinforcing layer can also be a conductive layer, for example a metal layer, which is spirally wound or seam welded on top of the thermoplastic layer in order to form a reinforcing metal layer of about 0.2mm to 5mm thickness over the thermoplastic layer. The reinforcing layer is preferably covered with another protective thermoplastic layer, which may contain, for example, pigments, antioxidants, fillers, and other modifying components.

Such reinforced multi-layer composite pipes are described, for example, in International Patent Application No PCT/FI96/00359, the entire disclosure of which is incorporated herein by reference for all purposes.

In order to form a firm bond between the reinforcing layer and the inner and outer thermoplastic layers, it is often necessary to use adhesives, or adhesive-promoting components, which can lose their adhesion-promoting ability if they are in contact with certain liquids, including water. Where the reinforcing layer is a metal layer, this must also be protected from any gases or liquids in the pipe, and from the environment, in order to avoid corrosion problems.

The gas or liquid flowing inside the pipe, and environmental moisture from outside the pipe, cannot normally come into contact with the reinforcing layer or the adhesive components due to the presence of the inner thermoplastic layer and the outer protective thermoplastic layer which together cover the reinforcing layer. However, at the ends of the pipe the continuity of the inner layer and the outer protective layer is disrupted, and therefore pipe connections need to be made in such a way that the reinforcing layer does not come into contact with either the gases or liquids within the pipe, or the outer environmental conditions.

Many solutions to the above problem have been proposed, but all have their drawbacks.

WO92/21908 discloses a pipe connection in which the reinforcing layer is terminated before the end of the pipe and the thermoplastic layer of the pipe is gripped between a conical adaptor and a steel pipe, which are threadedly engaged together. The disadvantage of this known pipe connection is that the connection is very long and that liquid, especially from the outside, but also from the inside of the pipe, can relatively easily enter the end of the reinforcing layer.

Another solution is provided in European Patent Application No 0736 719 in which the ends of composite plastic pipes to be connected are each provided with an extension, and a ring-shaped connecting piece is situated inside the pipes at the extended ends thereof, the connecting piece and the extensions of the pipes to be connected having fitting substantially conical surfaces which extend substantially to the ends of the pipes and from which the connecting piece and the extension are welded together. This system works well with glass fibre reinforced pipes, but is difficult to apply when the reinforcing layer is a metal layer, since it is difficult to form the conical extension without splitting the metal reinforcing layer.

A still further pipe connector is disclosed in DE 44 44 097 which shows an electrofusion coupler which is provided with an annular sealing means to seal the cut ends of the composite pipes. However, in this case, the connection is made only between the thin outer protective thermoplastic layers of the pipes to be connected, and there is no connection between the reinforcing layers. The pipe connection therefore represents a weak point in the pipeline, and is vulnerable to internal pressure and axially applied forces.

DE-G 91 07 713.3 describes an electrically heatable welding sleeve consisting of thermoplastics material for joining pipes, having an insert that seals the end faces of the pipes towards the inside. However the insert is formed from cross-linked polyethylene, which has poor barrier properties against many permeating fluids and gases and may be deformed by heat developed during installation.

It has now been found that many of the aforementioned difficulties can be substantially obviated using an improved insert having both diffusion barrier and supporting properties, which can be used with a variety of fittings for composite pipes.

According to a first aspect of the invention, there is provided a fitting for a composite pipe, the pipe comprising two or more plastics layers and at least one reinforcing and/or barrier layer interposed therebetween, the fitting comprising a hollow tubular internal supporting insert member and a hollow tubular external coupling member, the insert member and the coupling member being dimensioned so as to define an annular space adapted to receive one or more pipe ends, the insert member providing a supporting layer for the pipe during installation of the fitting and comprising, in use, a seal and a diffusion barrier material for fluid flowing in the pipe.

The invention also provides, in a further aspect, an insert member for a pipe fitting, the fitting comprising a hollow tubular internal supporting insert member and a hollow tubular external coupling member, the insert member being dimensioned so as to be received as a tight fit within one or more pipe ends, the insert member providing a supporting layer for the pipe during installation of the fitting and comprising, when installed, a seal and a diffusion barrier material for fluid flowing in the pipe.

The hollow tubular internal supporting insert member according to the invention is formed from a material that will remain substantially dimensionally stable at the installation or operating temperatures to which the insert member is exposed. Preferably the insert member is formed from a material that is dimensional stable at temperatures of 200°C or greater, preferably 250°C or greater, more preferably 300°C or greater, most preferably 350°C or greater. The material of the insert member of the present invention is also a barrier material for fluids flowing through the pipe, including both liquids and gases. Preferably the material of the insert member is impermeable to gases flowing through the pipe. Suitable materials for the insert member include metals, and particularly corrosion resistant metals such as, for example, brass, de-zincification resistant (DZR) brass and gun metal.

The hollow tubular internal supporting insert member can be dimensioned so as to be a tight fit in the pipe and thereby seal against fluid ingress into the joint region, and particularly the pipe end face(s). The seal can be further improved, if desired, by providing the insert member with one or more fluid sealing means which can comprise, for example, resilient O-rings or gaskets seated in grooves in the outer surface of the insert member, or resilient flanges. Two, four, six, or more O-rings, gaskets, or flanges can be provided depending upon the application.

Other types of sealing means may also be used. For example, if the inner wall of the plastics pipe is relatively soft, the use of an O-ring may, in some instances, give rise to an unacceptable level of creep.

In such cases, the O-ring can be replaced by an annular ring of a relatively soft viscous sealing material such as, for example, a mastic, or by an adhesive elastomeric sealant, or a hot melt adhesive. Where the sealing material is heat activatable, the necessary heat may be supplied by exterior heating or by the heat generated by the fusion means.

The insert member may be provided with locating means whereby the insert is positioned centrally with respect to the pipe joint. In embodiments of a pipe joint according to the invention where the pipe ends are butted together, this can comprise, for example, a locating profile or projection on the outer surface of the insert member, which cooperates with a recess machined in the pipe end(s). In an alternative embodiment, the insert member is provided with an integral locating and sealing ring which extends between the end faces of the pipe ends and further protects the pipe end faces, and the exposed reinforcing and/or barrier layers, from fluids flowing in the pipe.

The dimensions of the insert member will depend upon the application, but need to be sufficient to fulfil its supporting and barrier functions. The ends of the insert member may be profiled in order to facilitate its insertion into the pipe and also to ensure a smooth fluid flow through the joint region.

The fitting can comprise any suitable coupling member, including mechanical and compression devices, but the invention is especially advantageously applied to electrofusion fittings and will be more particularly described with reference thereto. It is to be understood, however, that the invention is not limited to electrofusion fittings or even fusion fittings and is generally applicable to all suitable pipe fittings.

In electrofusion fittings a pipe is fused or "welded" to another component by the action of an electrical heating element which may be a resistance or an induction heating element. The electrofusion fitting can, for example, comprise electrical conductor elements, for example, metal coils, rings, metal mesh, or other suitably shaped electrically conductive members, which are located adjacent to, or embedded in, a layer of fusible thermoplastic polymeric material in a region of the inner wall of the body of the coupling member. The electrical conductor elements may be energised, for example, by passage of an electric current therethrough, or by inductive heating, in order to melt the adjacent thermoplastic material and form a fusion bond with the outer surface of the plastics pipe.

The fusible thermoplastic polymeric material of the electrofusion fitting can comprise, for example, a polyolefin, for example, polyethylene, polypropylene, polybutylene and higher olefinic polymers; co-polymers of ethylene, propylene and butylene with each other and with other olefinically unsaturated monomers; vinyl halide polymers, for example, polyvinylchloride; olefinically unsaturated aromatic polymers such as polystyrene and styrene co-polymers; and polymers and co-polymers of vinyl monomers such as ethylene vinyl acetate co-polymers, polycarbonates, and like materials. Polyethylene is the preferred fusible polymeric material, particularly where multi-layer composite pipes having outer polyethylene surfaces are to be joined.

If desired, the fusible thermoplastic polymeric material can comprise a modified polyolefin material, for example, an anhydride modified polyethylene, or the material can comprise a cross-linking agent which reacts during or after the fusion bonding step to cross-link the polymeric material and possibly the adjacent surface of the pipe. Modified polyolefins are particularly useful in joining polyolefin surfaces of dissimilar composition. Suitable modified polyolefin materials include, for example, alpha olefin polymers and co-polymers comprising up to 10% by weight of an olefinically unsaturated carboxylic acid or an anhydride thereof, such as, for example, acrylic acid, maleic acid, itaconic acid, and succinic acid, or their anhydrides, as copolymer or graft copolymer components.

If desired, the fusible thermoplastic polymeric material can comprise one or more fillers, and, for example, it can comprise fillers which react and can reach high temperatures when exposed to infra-red radiation or electromagnetic radiation, for example, stainless steel fibres, as described in PCT/EP96/02801. The use of such fillers to assist, or instead of, the fusion means described above is included as a further aspect within the invention.

The hollow, tubular coupling member can comprise a plastics body, or a composite construction, with plastics and reinforcing layers. The reinforcement can, for example, comprise reinforcing fibres. In manufacturing a body reinforced with fibres, the reinforcing fibres can be wound on a preform and later provided with a plastics outer skin. Alternatively, the fibre reinforcement can comprise a three dimensional preform, which maintains its shape, and comprises fused plastics coated fibres. The preform can be set into a mould cavity and the spaces or interstices in the preform filled with a plastics matrix material by, for example, injection moulding, to give an oriented hollow, tubular body, as described in WO-A-9710941.

On assembly, the insert member can be placed inside the coupling member and an appropriate connection made in order to link the two hollow members together and create an annular space for receiving the end of the plastics pipe. Alternatively, the hollow members can be sequentially installed on the pipe, usually with the insert member installed first.

The dimensions of the fitting will, of course, be largely determined by the outer diameter and wall thickness of the pipe or pipes to be connected, and the length of the joint required, but preferably the annular space between the coupling member and the insert member is arranged to give a tight fit and conform closely to the dimensions of the pipe end.

Either the coupling member or the insert member, or both, can be provided with gripping means, which can, for example, comprise a series of two or more teeth which are radially disposed around the circumference and protrude slightly so that, in use, they are capable of contacting and gripping the outer and/or inner surfaces of the plastics pipe. The teeth of the gripping means can, if desired, be sharp enough to penetrate an outer surface layer of the plastics pipe, and, where a multi-layer composite pipe is to be connected, the teeth can penetrate to contact a reinforcing layer of the composite pipe, in order to improve the connection thereto.

Other forms of gripping means can be envisaged, for example, the teeth could be replaced by roughened surfaces, or the gripping means could comprise a resilient split ring, or similar component. The teeth or other gripping means are preferably infusible at the fusion temperature of the fusible thermoplastic polymeric material.

In one aspect, preferred embodiments of the fitting of the invention have the advantage that pipes of different thickness, but the same outside diameter, or pipes of different thickness but the same inner diameter, can be connected by replacing only one of the insert member and the coupling member, as appropriate. This can reduce inventory and save costs.

In certain embodiments, it may be preferred to manufacture the insert member from a sufficiently rigid material, or to provide it with a reinforcing layer, such that when it is pushed into the pipe it is a tight interference fit therein, and may even expand the bore of the plastics pipe slightly. The reinforcing layer can also impart further stability to the insert member when the material of the pipe end is heated during installation.

Similarly, the body of the coupling member can be made from a material which is slightly flexible so that it can be expanded outwards over the pipe end, to be in close contact with the outer surface of the plastics pipe once the pipe has been pushed into place.

The pipe fitting of the invention can, for example, be an in-line coupler, for connecting two similar pipes in line, a bend, for connecting two similar pipes arranged at an angle, a transition coupler, for connecting pipes of different diameters, or a fitting for connecting a multi-layer composite pipe to other fittings or pipes, wherein the fitting is provided, at its end remote from the connector of the invention, with other connecting means, for example, a screw-threaded end, a conventional electrofusion means, a butt fusion end, a flanged end or similar connecting means.

Certain embodiments of fittings in accordance with the invention, are described hereinafter, by way of example only, with reference to the accompanying Drawings in which:
Figure 1 is a longitudinal section of a first embodiment of an electrofusion fitting according to the invention; and
Figure 2 is a longitudinal section of a second embodiment of an electrofusion fitting according to the invention in which the insert is provided with a locating ring extending between the pipe ends.

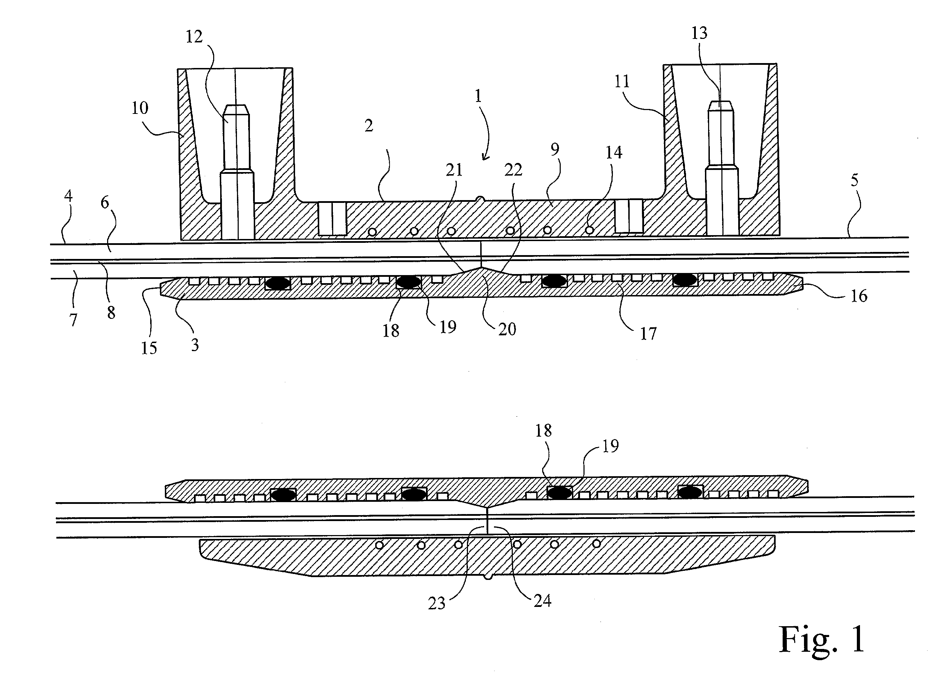

Referring firstly to Figure 1, the fitting, illustrated generally at 1, comprises an electrofusion coupler 2 and an insert member or liner 3. The pipes 4, 5 to be joined, are composite pipes having an external polyethylene layer 6, an internal polyethylene layer 7 and a reinforcing aluminium layer 8 interposed between the layers 6 and 7. The electrofusion coupler 2 is a conventional in-line coupler formed from polyethylene, having a body 9 and terminal sockets 10, 11. The upstanding terminal sockets 10, 11 surround metal pins 12, 13 which are connected to an electrofusion coil 14 which is embedded in the internal surface of the body 9 of the coupler 2.

The insert member 3 is formed from either brass, DZR brass or gun metal and is a tight fit within the pipes 4, 5. The insert member 3 extends for the full length of the coupler 2 and has tapered ends 15, 16, which project beyond the ends of the coupler 2. The insert member 3 may or may not have shallow grooves 17 around its outer periphery. Inserts with shallow grooves assist in gripping the inner wall 7 of the pipe. The deeper grooves 18 house resilient O-rings 19. The O-rings 19 press firmly against the internal walls of the pipes 4, 5, forming a liquid seal. At the centre of the insert member 3 there is provided a shallow projection 20 that cooperates with recesses 21, 22 that are machined in the pipe ends. The projection 20 acts as a stop member when the insert member is pushed into the pipes and serves to locate it centrally when the pipe end surfaces 23, 24 are butted together.

When installing the fitting, the coupler 2 is first pushed over one of the pipe ends, the insert member 3 is inserted into the pipe ends, which are then brought together. When the pipe end surfaces 23, 24 are firmly butted together the coupler 2 is then slid into position over the joint. Electrofusion is then carried out in the normal way. The presence of the insert prevents any fused plastics material from flowing into the pipe and supports the pipe ends against any sagging which might otherwise take place due to the heat of fusion.

In addition to its supporting function, the insert 3 also provides a fluid barrier preventing fluid flowing in the pipe from reaching the pipe end surfaces 23, 24 and also acts as a barrier to prevent gasses and vapours from the pipe from contacting the exposed aluminium layer 8 at the pipe end surfaces 23, 24. The exposed aluminium layer at the joint surface is therefore protected externally by the fusion coupler 2, and internally by the metal insert member 3.

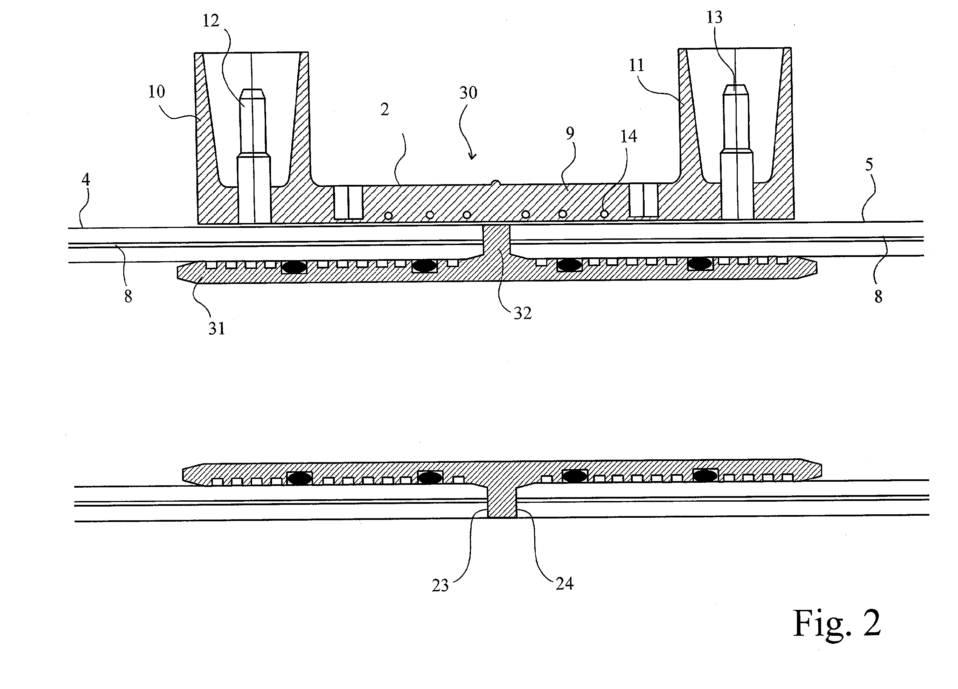

Turning now to figure 2, a second embodiment of a fitting according to the invention is illustrated generally at 30. The fitting has the same electrofusion coupler 2 as in figure 1, and corresponding numerals refer to the same parts.

The insert member 31 is identical to the insert member 3 in figure 1, with the exception that the projection 20 in figure 1 is supplemented by an integral upstanding locating ring 32 which extends between the pipe ends and abuts against the end faces 23, 24. The upstanding locating ring 32, being also made of either brass, DZR brass or gun metal provides continuity of the metal layer 8 across the joint. It will be appreciated that, where the metal layer 8 provides an impermeable vapour barrier layer, the brass, DZR brass or gun metal locating and sealing ring 32 ensures that there is no gap in the vapour barrier at the pipe joint.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

## Claims

1. A fitting for a composite pipe, the pipe comprising two or more plastics layers and at least one reinforcing and/or barrier layer interposed therebetween, the fitting comprising a hollow tubular internal supporting insert member and a hollow tubular external coupling member, the insert and the coupling member being dimensioned so as to define an annular space adapted to receive one or more pipe ends, the insert providing a supporting layer for the pipe during installation of the fitting and comprising, in use, a seal and a diffusion barrier material for fluid flowing in the pipe.

2. A fitting according to claim 1, wherein the insert member is formed from a material that will remain substantially dimensionally stable at temperatures of 250°C or greater.

3. A fitting according to claim 1 or 2, wherein the material of the insert member is impermeable to gasses flowing through the pipe.

4. A fitting according to any one of the preceding claims, wherein the insert member is formed from a metallic material.

5. A fitting according to claim 4, wherein the insert member is formed from a corrosion resistant metal.

6. A fitting according to claim 4 or 5, wherein the metal is brass, DZR brass or gun metal.

7. A fitting according to any one of the preceding claims, wherein the insert member is provided with one or more fluid sealing means.

8. An insert member according to claim 7, wherein the fluid sealing means comprises resilient O-rings or gaskets seated in grooves in the outer surface of the insert member, or resilient flanges.

9. A fitting according to claim 7, in which the fluid sealing means comprises an annular ring of a relatively soft viscous sealing material, an adhesive elastomeric sealant, or a hot melt adhesive.

10. A fitting according to any one of the preceding claims, wherein the insert member is provided with locating means whereby the insert is positioned with respect to the pipe joint.

11. A fitting according to claim 10, in which the locating means comprises a profile or projection on the outer surface of the insert member which cooperates with a recess machined in the pipe end(s).

12. A fitting according to any one of claims 1 to 10, in which the insert member is provided with an integral locating and sealing ring which extends between the end faces of the pipe ends and further protects the pipe end faces, and the exposed reinforcing and/or barrier layers, from fluids flowing in the pipe.

13. A fitting according to any one of the preceding claims, wherein the insert member is profiled in order to facilitate its insertion into the pipe and also to ensure a smooth fluid flow through the joint region.

14. A fitting according to any one of the preceding claims, wherein the coupling member is an electrofusion coupler.

15. A fitting according to claim 14, wherein the electrofusion coupler comprises a plastics body formed from polyethylene.

16. A fitting according to any one of the preceding claims, wherein either the coupling member or the insert member, or both, are provided with gripping means.

17. A fitting according to any one of the preceding claims, which is an in-line coupler.

18. An insert for a pipe fitting, the fitting comprises a hollow tubular internal supporting insert member and a hollow tubular external coupling member, the insert member being dimensioned so as to be received as a tight fit within one or more pipe ends, the insert providing a supporting layer for the pipe during installation of the fitting and comprising, in use, a seal and a diffusion barrier material for fluid flowing in the pipe.

19. An insert member according to claim 18, having any one of the features of claims 2 to 17.
